# EUROPEAN PATENT APPLICATION

(11) **EP 2 409 955 A1**
(43) Date of publication of application: **25.01.2012**
(21) Application number: 11175057.6
(22) Date of filing: 22.07.2011
(51) Int. Cl.: C02F 1/469, C02F 1/461, C02F 5/00, C02F 103/02

(54) **Apparatus for removal of ions, and a method for removal of ions**

(30) Priority: 23.07.2010 NL 2005136
(71) Applicant: Voltea B.V., 2171 AE Sassenheim (NL)
(72) Inventor: van der WAL, Albert, 2341 LP OEGSTGEEST (NL); REINHOUDT, Hank Robert, 2613 DS DELFT (NL); van LIMPT, Bart, 2318 AX LEIDEN (NL); BIESHEUVEL, Pieter Maarten, 6703 HD WAGENINGEN (NL); DLUGOLECKI, Piotr Edward, 80-296 GDANSK (PL)
(74) Representative: Fluit, Jeroen

(57) **Abstract**

An apparatus and a method for removal of ions from water is provided. The apparatus is provided with at least three electrodes: two master electrodes 21, 22, each comprising a current collector connected to a power supply PC for creating an electrical potential difference between two master electrodes and at least one floating electrode 23 located between the two master electrodes. The apparatus is constructed to allow water to flow between two adjacent electrode surfaces. A substantially thin layer of insulating material is provided to an edge of at least one floating electrode, the substantially thin layer extending in a longitudinal direction of said electrode.

## Description

### Field of the invention

The invention relates to an apparatus for removal of ions from water, the apparatus being provided with a housing comprising a water inlet for letting water in the housing, a water outlet for letting water out of the housing, at least three electrodes, comprising: two master electrodes, each comprising a current collector connected to a power supply for applying an electrical potential difference between the two master electrodes; and, at least one floating electrode located between the two master electrodes; the apparatus being constructed to allow water to flow from the water inlet to the water outlet between two adjacent electrodes.

### Background art

ln recent years many people have become increasingly aware of the impact of human activities on the environment and the negative consequences this may have. Ways to reduce, reuse and recycle resources are becoming more important. ln particular, clean water is becoming a scarce commodity. Therefore, various methods and devices for purifying water have been published.

A method for water purification is by capacitive deionisation, using an apparatus provided with a flow through capacitor (FTC) for removal of ions in water. The FTC functions as an electrically regenerable cell for capacitive deionisation. By charging electrodes, ions are removed from an electrolyte and are held in electrical double layers at the electrodes. The electrodes can be (partially) electrically regenerated to desorb such previously removed ions without adding chemicals. The apparatus for removal of ions comprises one or more pairs of spaced apart electrodes (a cathode and an anode) and may comprise a spacer, separating the electrodes and allowing water to flow between the electrodes.

The apparatus is provided with a housing comprising a water inlet for letting water in the housing and a water outlet for letting water out of the housing. ln the housing of the apparatus for removal of ions the layers of electrodes (and spacers) are stacked in a "sandwich" fashion by compressive force, normally by mechanical fastening.

The efficiency of the apparatus during purification may be relevant because it may be indicative of the amount of water that may be purified by the apparatus over a period of time. Further, efficient use of resources may be relevant for the use and/or production of the apparatus.

### Summary of the invention

lt's an objective of the invention to provide an improved efficiency for the apparatus for removal of ions. This objective is met by providing an apparatus for removal of ions from water, the apparatus being provided with a housing comprising: a water inlet for letting water in the housing; a water outlet for letting water out of the housing; at least three electrodes, comprising: two master electrodes, each comprising a current collector connected to a power supply for applying an electrical potential difference between the two master electrodes; and, at least one floating electrode located between the two master electrodes; the apparatus being constructed to allow water to flow from the water inlet to the water outlet between two adjacent electrodes; wherein a substantially thin layer of insulating material is provided to an edge of at least one floating electrode, the substantially thin layer extending in a longitudinal direction of said electrode.

ln an embodiment, a thickness of the thin layer is less than 1000 micrometers, or in a range of 0-500 micrometers, or more preferably in a range of 5-50 micrometers.

According to an embodiment, the substantially thin layer comprises a strip of an adhesive insulating tape.

ln a further embodiment, the substantially thin layer extends from said edge at least 0.5 mm or in a range of 0.5 - 50 mm, or more preferably in a range of 3 - 20 mm in the longitudinal direction of the electrode.

ln an embodiment, the substantially thin layer of insulating material is at least partially fastened on a main surface of said one floating electrode. ln yet another embodiment, at least one electrode has a substantially sheet like shape, in which a hole is provided.

According to an embodiment, the substantially thin layer of insulating material is provided to one of the at least one floating electrode between additional neighboring layers. The additional layers may comprise a spacer for allowing water to flow in between adjacent electrodes. The additional layers may comprise a membrane, e.g. an ion exchange membrane.

ln an embodiment the electrode and the substantially thin layer of insulating material form a plate having a substantially similar size in the longitudinal direction as the additional layers.

ln an embodiment the substantially thin layer of insulating material is at least partially fastened on both main surfaces of said one floating electrode.

ln an embodiment the total width W of the thin layer of insulating material in the longitudinal direction of the electrode is 2-200 times, and more preferably 5-50 times, or even more preferably 5-20 times the thickness of the electrode.

This objective is also met by providing a method for removal of ions, the method comprising:
providing a housing with a water inlet and a water outlet;
providing in the housing at least three electrodes, comprising two master electrodes and at least one floating electrode located between the two master electrodes;
providing a thin layer of insulating material disposed to an edge of at least one floating electrode, the thin layer extending in a longitudinal direction of said electrode;
applying an electrical potential difference between the two master electrodes; and,
allowing water to flow from the water inlet to the water outlet between two adjacent electrodes.

ln an embodiment the thin layer of insulating material is provided on two sides of the floating electrode. The thin layer of insulating material may be provided by lamination.

### Brief description of the figures

Embodiments will be described, by way of example only, with reference to the accompanying schematic drawings in which corresponding reference symbols indicate corresponding parts, and in which:
Figure 1 shows a schematic cross-section of an electrode for removal of ions;
Figure 2 shows a schematic representation of a stack of electrodes;
Figure 3 shows a schematic representation of the apparatus for removal of ions according to an embodiment;
Figure 4 shows a schematic representation of a master electrode with insulating material according to an embodiment;
Figure 5 shows a schematic representation of an electrode with insulating material according to several embodiments;
Figures 6a and 6b show two schematic cross-sections of an edge of an electrode with insulating material according to an embodiment;
Figure 7 shows a schematic representation of a floating electrode according to an embodiment;
Figure 8 shows a schematic representation of a floating electrode according to an embodiment;
Figure 9 shows a schematic representation of another embodiment of the apparatus for removal of ions according to an embodiment;
Figure 10 shows a schematic representation of another embodiment of the apparatus for removal of ions according to an embodiment; and,
Figure 11 a to 11 d show schematic cross-sections of an edge of an electrode with insulating material according to an embodiment.

### Detailed description of the invention

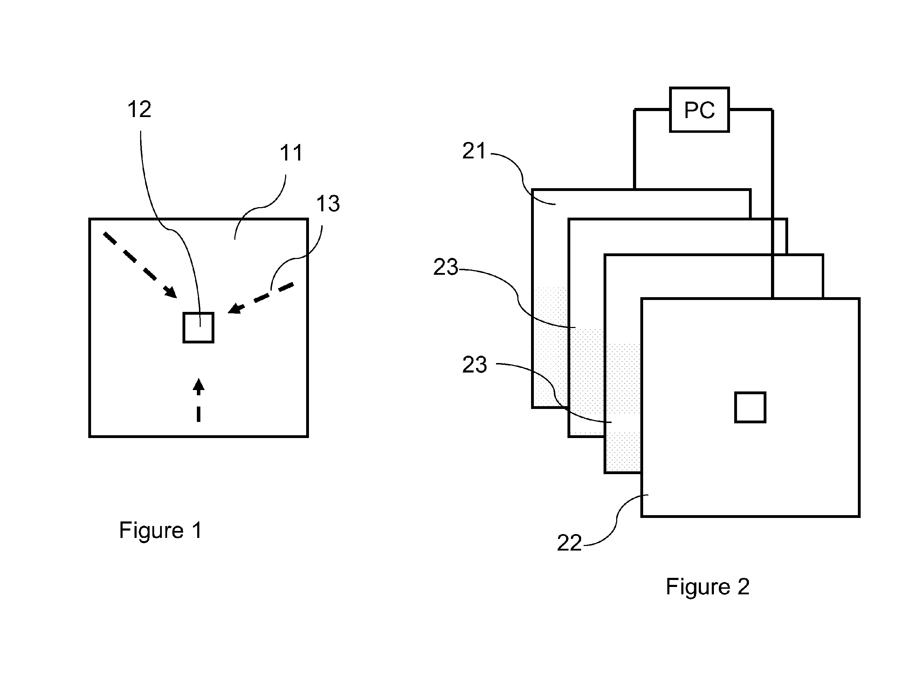

Figure 1 shows a schematic cross section of an embodiment of an electrode, being a first or a second master electrode or a floating electrode. ln this example, the electrode 11 has a sheet like shape with a rectangular form, but other shapes, such as a round shape, polygonal or a hexagonal shape are also possible. ln the electrode a hole 12 may be provided, which may have a rectangular shape but also other shapes, for example a round shape, are possible. When electrode 11 is in use, water may be flowing along the electrode from the outer edges towards the hole, as is indicated by the dotted arrows 13 in figure 1. The water may be flowing through a spacer. Typically, the outer dimensions of the electrode 11 are about 16 x 16 cm, 20 x 20 cm or 25 x 25 cm and the dimensions of the hole 12 are about 3 x 3 cm.

An advantage of a rectangular or a hexagonal shape of the electrode may be that these electrodes are efficiently produced with respect to the use of materials. An advantage of a round shaped electrode with a round hole in the centre may be that a distance between the outer edge and the inner edge (i.e. the distance the water will flow along the electrode) is constant for all flow directions.

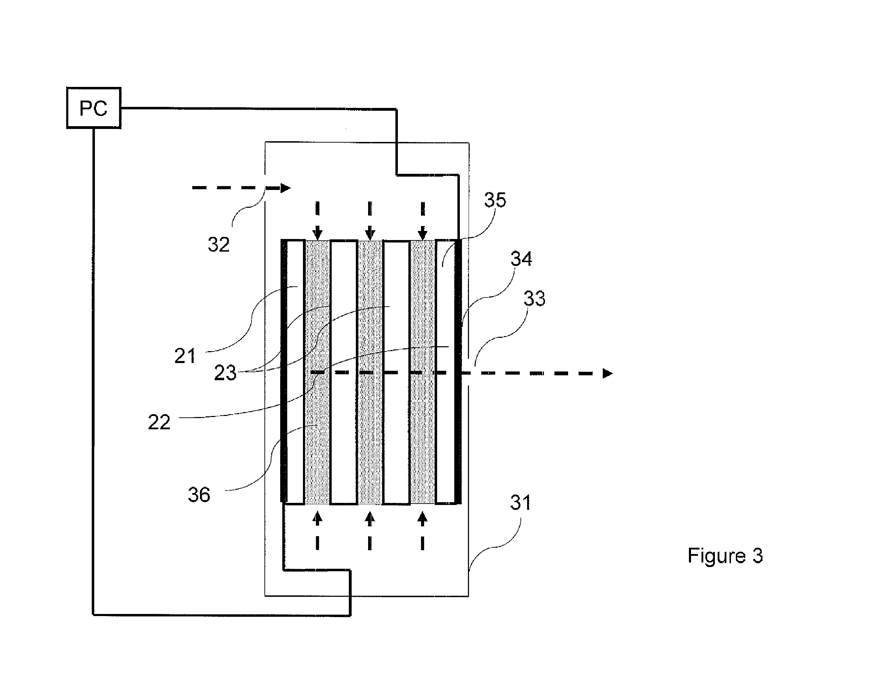

Figures 2 and 3 schematically show a stack of electrodes. The first master electrode 21 and the second master electrode 22 each comprise a current collector, indicated by 34 in figure 3, and an ion storage material, indicated by 35 in figure 3. The current collector may be connected to a power controller PC for applying an electrical potential difference between two master electrodes. lt may be the case that the ion storage material comprises an electrically conductive layer (for example a grid) inside the ion storage material. The conductive layer may serve as the current collector and thus may be connected to the power controller PC.

The electrodes in between the two master electrodes are floating electrodes 23. A floating electrode is an electrode which is not electrically connected to the power supply PC, in contrast to a master electrode which may be electrically connected to the power supply. The number of floating electrodes is at least one. Floating and/or master electrodes also may comprise an ion storage material.

The ion storage material may store ions that have been removed from the water. The ion storage material may be a so-called high surface area material, with more than 500 m²/gr, or preferably more than 1000 m²/gr, or even more preferably more than 1500 m²/gr. The material may comprise activated carbon, carbon nanotubes, activated carbon black graphene material or carbon aerogels on both sides of the electrode which are in contact with the water or throughout the electrode.

Figure 3 shows a schematic overview of the apparatus for removal of ions according to an embodiment. The apparatus may have a housing 31 provided with a water inlet 32 and a water outlet 33. During ion removal, the water will flow from the water inlet 32 to the water outlet 33 between pairs of adjacent electrodes. Between each pair of adjacent electrodes a spacer 36 may be provided to allow water to flow between each pair. The spacer 36 may have a shape as is depicted in figure 1. The main function of the spacer may be to separate two adjacent electrodes, for example by maintaining a constant distance between the two electrodes. The electrodes may be clamped within the housing to provide a water leakage free apparatus.

Between a spacer and an electrode a selective charge barrier may be provided, for example an ion exchange membrane or an ion selective membrane. For example, the membrane provided on a cathode may be permeable for cations, thus allowing only the transport of cations, but blocking the transport of anions. The membrane provided on an anode may be permeable for anions and blocking the transport of cations. The selective charge barrier may enhance the storage of ions in the ion storage material and thus improve the efficiency of the apparatus for removal of ions.

An electrical potential difference may be applied between the two master electrodes 21, 22, for example by applying a voltage to the first master electrode 21, i.e. the anode master electrode that is positive with respect to a lower voltage applied to the second master electrode 22, i.e. the cathode master electrode.

Because of the applied electrical potential difference between the two master electrodes, the floating electrodes may become polarized due to electron movement in the floating electrodes. A polarized floating electrode may be considered as consisting of two parts, an anode part and a cathode part. The anode part of a floating electrode is charged with a positive charge δ+ and faces the cathode master electrode or a cathode part of another floating electrode. The cathode part of a floating electrode is charged with a negative charge δ- and faces the anode master electrode or a anode part of another floating electrode

The anions of the water flowing between a pair of adjacent electrodes are attracted to the anode master electrode or to the anode part of a floating electrode and the cations are attracted to the cathode master electrode or to the cathode part of a floating electrode. ln this way the ions (both anions and cations) may be removed from the water. An element of the efficiency of the apparatus may be the number of ions removed from the water (for example from water in a spacer) to one of the electrodes per unit time per projected electrode area.

During a regeneration phase, the applied electrical potential difference between the two master electrodes may be reduced or even reversed, which subsequently may also lead to a reduced or even reversed polarity in the at least one floating electrode, causing ions stored in the electrode to disperse from the electrode into the water in between the electrodes. During the regeneration phase the water in between the electrodes may therefore have an increased ion concentration. This water is considered as waste and may be disposed.

The total potential difference between the two master electrodes may be distributed over pairs of adjacent electrodes that are positioned between the two master electrodes. lf the applied electrical potential difference between the two master electrodes is ΔU and the number of floating electrodes is N, the electrical potential difference between each pair of adjacent electrodes may be approximately ΔU/(N+1).

The electrical potential difference between each pair of adjacent electrodes maybe rather low, for example lower than 2 Volt, preferably lower than 1,7 Volt and even more preferably lower than 1,5 Volt. The electrical potential difference between the two master electrodes may be higher, for example N+1 times higher, or in the range of 20-48 Volt, or even more preferably about 12 Volt or 24 Volt, since common power controllers and power boards provide an electrical potential difference of 12 or 24 Volt.

During the removal of ions, ions may flow between two adjacent electrodes, but a high potential difference between the two master electrodes may give rise to a leak current flowing between the two master electrodes, between a master electrode and a non-adjacent floating electrode or between two non-adjacent floating electrodes. A high electrical potential difference between these electrodes may lead to electrolysis of water or may even cause corrosion of a master electrode or a floating electrode.

The selection of ion storage material is among others based on the ion storage capacity of the material. However, these materials tend to corrode relatively easily. For example, the ion storage material graphite may already corrode significantly at an electrical potential difference of about 2 Volt. Furthermore, during the regeneration phase, the relatively high concentration of ions may further enhance the flow of leak currents.

Both electrolysis and corrosion may decrease the efficiency of the apparatus for removal of ions. Corroded parts of the apparatus may need replacement which causes an inefficient use of resources for the apparatus. Corrosion may be avoided by using (expansive) corrosion free material.

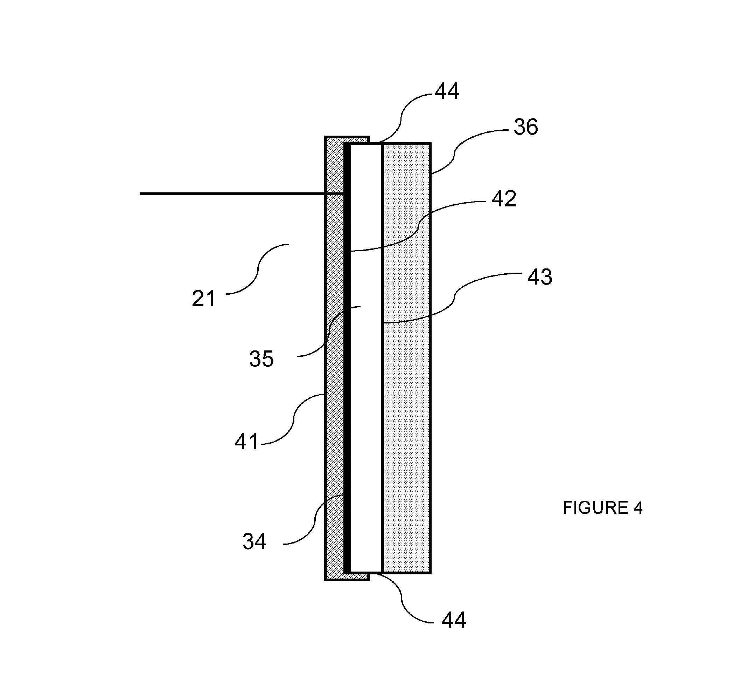

According to an embodiment, leak currents may be minimized by providing a master electrode with insulating material. Figure 4 shows as an example the first master electrode 21 from figure 3, but the same may apply to any other master electrode. Master electrode 21 comprises a current collector 34 and an ion storage material 35. A spacer 36 is also depicted. The master electrode may be provided with insulating material 41. The electrically insulating material 41 may be placed around the current collector 34 and it may also cover a part of the ion storage material 35, as is indicated in figure 4. The insulating material may prevent electrical currents flowing from or towards the parts that the insulating material may be covering, when in use, for example during desalination or regeneration, an electrical potential difference may be applied. This potential difference may be high, depending on the number of floating electrodes, e.g. more than 48V or even more than 100V.

The insulating material 41 may be placed on a surface 42 of the electrode that is not facing any of the other electrodes. The insulating material may also be placed on surface 44, where it may cover surface 44 completely or partly. Surface 44 is also not facing any of the other electrodes. Therefore, a surface 43 that is facing another electrode remains in contact with the water and ions may be retrieved from the water. The insulating material may minimize the leak currents flowing between a master electrode and a non-adjacent electrode.

The insulating material may comprise resin or any other electrically non-conductive materials. Advantages of resin are that it has a high electrical resistance, it may easily be applied as a liquid and it may prevent water from being in contact with the electrode. The insulating material may also comprise foam rubber, which provides the same advantages as resin.

The surface 42 of the electrode 21 may also be insulated by providing the electrode 21 partly inside or against the housing 31. The housing may comprise the insulating material. When the insulating material is provided in the housing, only surface 44 may be covered (partly) by the insulating material. The insulating material may then also be resilient in order to enable press-fitting the master electrode into a recess in the housing. Surface 42 of master electrode is then placed within the housing, such that no leak currents flow from or to the master electrode.

Referring to figure 3, it may be the case that the electrical potential difference between two non-adjacent floating electrodes may be relatively high, for example higher than 2 Volts. A leak current from a floating electrode to another non-adjacent floating electrode may then also cause electrolysis or corrosion, which may lower the efficiency of the apparatus for removal of ions.

According to an embodiment, these leak currents may be minimized or prevented by providing a thin layer of insulating material disposed on or in one of the floating electrodes, when the thin layer extends outwardly from an edge of said electrode in a longitudinal direction of said electrode. This longitudinal direction may be parallel to a direction of the water flow along the electrode, for example through the spacer, as is indicated by arrows 13 in figure 1.

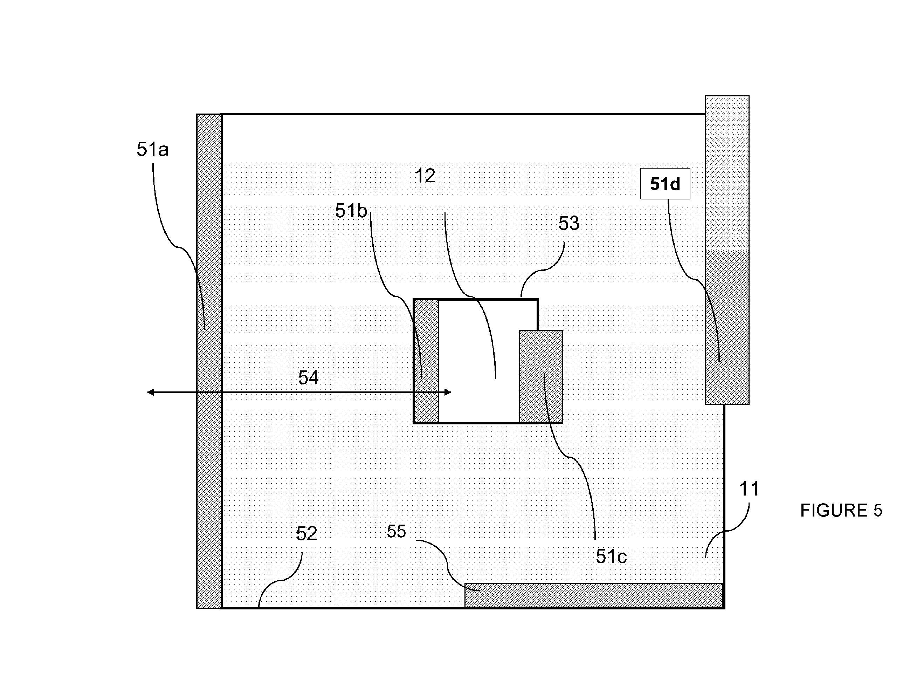

Figure 5 depicts a schematic overview of several examples of such a thin layer. ln figure 5 electrode 11 is an example of a floating electrode, but electrode 11 may also be a master electrode. Electrode 11 comprises two edges, a first edge 52, i.e. the outer circumference of the electrode, and a second edge 53, i.e. the circumference of hole 12. Examples 51a and 51b of a thin layer of insulating material are disposed on the electrode 11 and extend outwardly from edges 52 and 53 in a longitudinal direction of the electrode, which is indicated by arrow 54. The thin layer may be disposed on a part of the edge 52, 53 or on along the whole edge 52, 53.

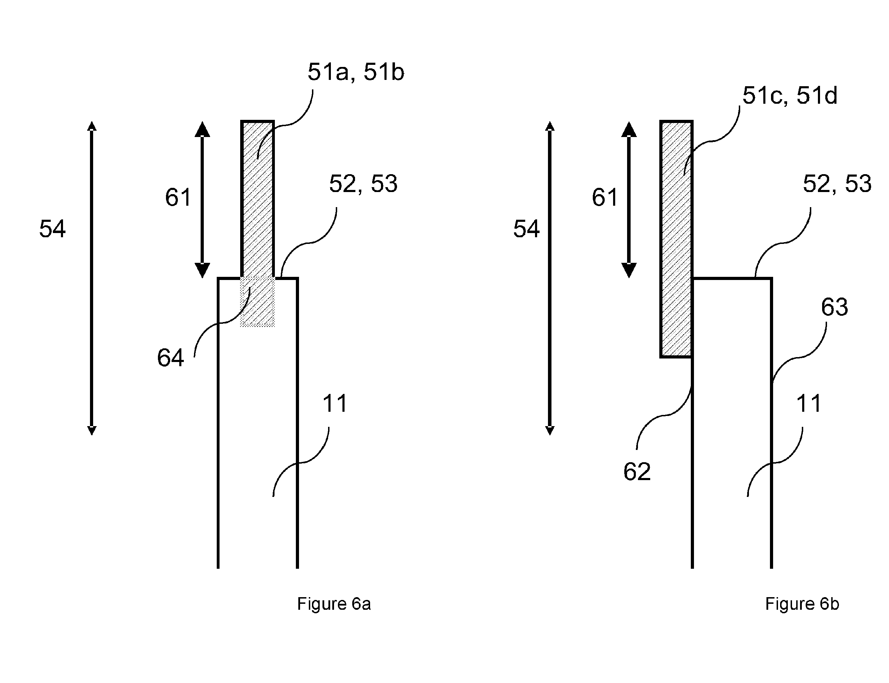

Figure 6a depicts schematic part of a cross section of edge 52 or 53, on which said thin layer is disposed. According to an embodiment, the thin layer of insulating material is disposed on a surface 62 of the electrode, as is indicated by examples 51c and 51d in both figure 5 and 6b. Surface 62 may be facing an adjacent electrode and may be the cathode part or the anode part of a floating electrode.

Providing the thin layer on surface 62 may enable the construction process to be easier and cheaper. The construction process may be further optimized when the thin layer of insulating material comprises a strip of an insulating adhesive tape, which is relatively easy to provide on the electrode 11 or on the surface 62 of the electrode 11.

The electrode may be typically 0.5-1 mm thick. lf the thin layer of insulating material would be thicker than these dimensions, it may influence the flow of water along the electrode, for example through the spacer. Therefore, it may be advantageous that the thickness of the thin layer is less than the thickness of the electrode, i.e. less than 1 mm or even less than 0.5 mm. ln a further embodiment, a second thin layer of insulating material may be provided on a second electrode surface 63, with the same characteristics as the first thin layer of insulation. The ends of both thin layers may be joined. For example, the end of a first thin layer of insulating material provided on the cathode side of a floating electrode may be joined with the end of a second thin layer of insulating material provided on the anode side of said floating electrode. This may result in better insulation and a more solid construction than when only one thin layer is disposed. This second thin layer may also comprise a strip of an isolating adhesive tape.

ln another embodiment, the insulating material may be disposed partly or completely inside the electrode, for example at the edges of the electrodes, as indicated by 55 in figure 5. This may be achieved by inserting insulating substances into the electrode. ln figure 6a, a part of insulating material inside the electrode may be indicated by 64. This may decrease the effective area of the electrode, but may prevent leak currents with minimal increase of the dimensions of the electrode.

The effect of the thin layer of insulating material according to an embodiment may be that it extends the electrical path between two non-adjacent electrodes, being master electrodes and/or floating electrodes, and thereby increases the electrical resistance between them. Higher resistance between two non-adjacent electrodes may lower the leak current between them.

The thin layer of insulating material may extend from the edge 52, 53 a distance indicated by arrow 61 in figures 6a and 6b. The length of electrical path between two non-adjacent electrodes, may be further increased by increasing distance 61. Therefore, distance 61 may be at least 0.5 mm or in the range of 0.5 - 50 mm, or more preferably in the range of 3 ― 20 mm.

The thin layer of insulating material may also be used during the production process, since the insulating material may be stronger than the ion storage material of the electrode. Since the thin layer may extend through the electrode and may even extend outwardly from the electrode, the thin layer may provide one or more handling points that may be used during the production process or during maintenance. lnstead of grabbing the ion storage material, the thin layer of insulating material may be grabbed to handle the electrode. This may prevent the ion storage material from tearing, breaking or undergoing any other deformation. The insulating material maybe stronger than the ion storage material, meaning it would require a larger force to tear, break or damage the insulating material than it would require to do so with the ion storage material. The thin layer of insulating material may be provided with features to enable a better handling of the electrode, such as one or more recesses or additional reinforcements.

A method for removal of ions is also described, the method comprising the steps of a) providing a housing with a water inlet and a water outlet; b) providing in the housing at least three electrodes, comprising two master electrodes and at least one floating electrode located between the two master electrodes; c) providing an insulating material on at least one of the two master electrodes to minimize a leak current from said master electrode to a non-adjacent electrode; d) applying an electrical potential difference between the two master electrodes; and, e) allowing water to flow from the water inlet to the water outlet between two adjacent electrodes. ln a further embodiment, the method further comprising the following step of b2) between step b) and c): providing a thin layer of insulating material disposed on one of the at least one floating electrode, the thin layer extending outwardly from an edge of said electrode in a longitudinal direction of said electrode.

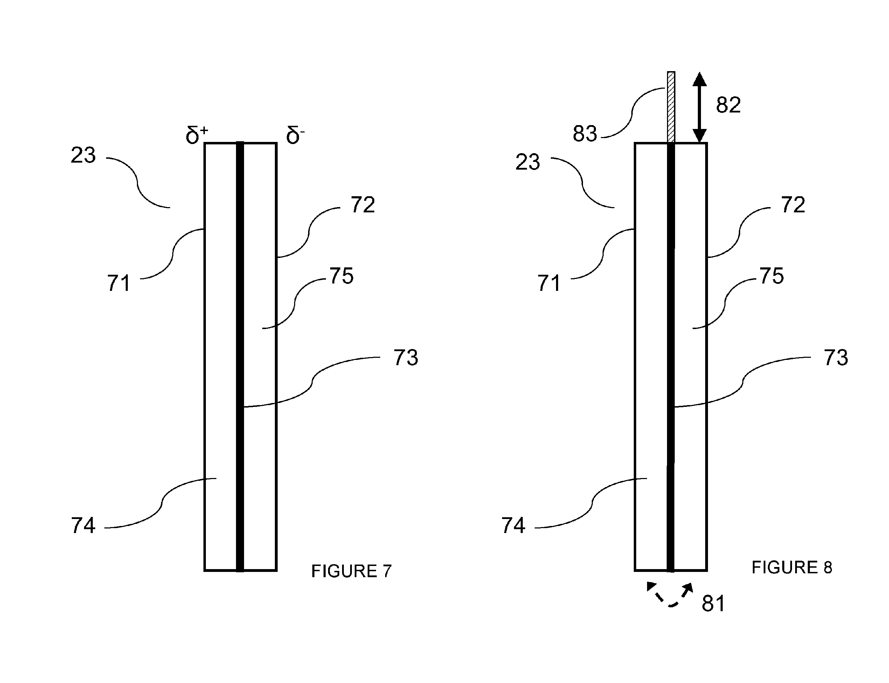

ln figure 7 a floating electrode 23 is depicted. It is asssumed that a first surface 71 is facing the cathode master electrode 22 or an adjacent cathode part of another floating electrode and that a second surface 72 is facing the anode master electrode 21 or an adjacent cathode part of another floating electrode. Floating electrode 23 may be polarized in such way, that part 74 of the floating electrode may be considered as the anode part of the floating electrode and part 75 may be considered as the cathode part of the floating electrode.

When water is flowing along floating electrode 23, ions may be removed from the water. Anions may be stored in the ion storage material of the anode part of the floating electrodes and cations may be stored in the cathode part.

According to another embodiment the floating electrode may be provided with an ion barrier layer 73. The ion barrier layer 73 separates the cations in the cathode part from the anions in the anode part and may prevent precipitation of ions at the border between the anode part and the cathode part. It would be difficult to remove these precipitates form the ion storage material, since they do not dissolve in the water. After all, the cations and anions that are stored in the ion storage material of the electrodes are commonly removed from the electrodes by an inversion of the electrical field between the two master electrodes during the regeneration phase. lf these precipitates are not removed, they may lower the storage capacity of the ion storage material and therefore the efficiency of the apparatus for removal of ions may be decreased.

Furthermore, the ion barrier layer 73 may prevent cations from moving to the anode part and anions from moving to the cathode part, especially during the regeneration phase. Anions in the cathode side and cations in the anode part may lower the ion storage capacity of the electrode during use and thereby lower the efficiency of the apparatus.

However, for the polarization to occur in a floating electrode, it may be necessary that electrons are able to move from one side of the floating electrode (the anode part) to the other side of the floating electrode (the cathode part). Therefore, it may be advantageous that the ion barrier layer comprises a non-ion conductive layer. A non-ion conductive layer may prevent ions from passing through the layer, while permitting electrons to pass.

The ion barrier layer 73 may comprise any non-ion conductive material such as electrically conductive polymers, graphite or titanium and may comprise the same material as the current collectors. Since the floating electrodes also comprise an ion storage material, both the master electrodes and the floating electrodes may comprise the same materials. This would simplify the production process of the electrodes and therefore may lower the costs.

Preventing the ions from moving from one side of the floating electrode to the other side may be further optimized by providing an ion barrier layer 73 that extends through said floating electrode parallel to the two master electrodes. lt may be advantageous to divide the floating electrode in two parts by an ion barrier layer, such that both the anode part and the cathode part have equal ion storage capacity. This may result in an ion barrier layer that may not be provided on a central line of the floating electrode, for example, when the storage capacity for anions per volume (cubic meter) or per weight may be different from the storage capacity for cations. Floating electrodes with different anode and cathode part dimensions are referred to as asymmetrical electrodes. Other ways of dividing the floating electrode by the ion barrier layer may also be applied to further optimize the ion removal.

According to an embodiment, at least one of the floating electrodes of one of the above mentioned embodiments may be a symmetrical electrode.

According to an embodiment, the ion barrier layer may have a thickness in a range of 5 - 1000 micrometers, or more preferably in a range of 10 - 250. The ion barrier layer may be blocking at least 90% of the ions.

ln the example above, it may be assumed that the floating electrode comprises only one type of ion storage material, but it is also possible to provide one type of ion storage material for the anode part and another type of ion storage material for the cathode part of the floating electrode.

Figure 8 shows an embodiment of a floating electrode. The ion barrier layer comprises insulating material 83 provided extending outwardly from said floating electrode in a longitudinal direction. Because of the building up of charges on both sides of the ion barrier layer, it may be possible that during regeneration of the electrodes ions stored in one side of the floating electrode may move via the water towards the other side of the floating electrode, as is indicated by arrow 81 in figure 8. It is possible that these ions may flow away with the water or form precipitates in the water or in the floating electrode itself. All these effects would lower the efficiency of the apparatus.

In order to prevent this, the insulating material 83 may extend a certain length outwardly from the electrode, as is indicated by arrow 82. An optimum may be observed when the insulating material 83 extends from the edge at least 0.5 mm or in the range of 0.5 - 50 mm, or more preferably in the range of 3 - 20 mm.

The insulating material 83 may be an electrically insulating material for both electrons and ions, since a non-ion conductive material only would prevent the movement of ions, but could increase the risks of leak currents.

The insulating material 83 may also provide one or more handling points for handling the electrode. Instead of grabbing the ion storage material, the insulating material 83 may be grabbed to handle the electrode. The features of the thin layer of insulating material with respect to the handling of the electrode as is described above may also be applied to the ion barrier layer. In that case, the entire ion barrier layer comprising a non-ion conductive material inside the electrode and insulating material extending outwardly from the electrode, may be stronger than the ion storage material.

A method for removal of ions is also described, the method comprising the steps of:
a) providing a housing with a water inlet and a water outlet; b) providing in the housing at least three electrodes, comprising two master electrodes and at least one floating electrode located between the two master electrodes; c) applying an electrical potential difference between the two master electrodes; and, d) allowing water to flow from the water inlet to the water outlet between two adjacent electrodes; and, e) preventing anions from moving from an anode side of the at least one floating electrode to a cathode side of said floating electrode and cations from moving from said cathode side to said anode side.

In an embodiment, the ion barrier layer may be provided within said floating electrode extending through said floating electrode parallel to the two master electrodes. And in another embodiment, the ion barrier layer is provided extending outwardly from an edge of said floating electrode in a longitudinal direction of said floating electrode.

As described above, it may be advantageous to provide an apparatus for removal of ions with a stack of electrodes, wherein the two electrodes at the outermost position are connected to a power supply. These two electrodes are referred to as master electrodes, while the electrodes between the two master electrodes are referred to as floating electrodes. The electrical potential difference between the master electrodes may cause the floating electrodes to polarize, causing each floating electrode to have a cathode part or cathode side and an anode part or anode side.

Preferably, the electrical potential difference between two adjacent electrode, for example between an anode part of a floating electrode and a cathode part of another adjacent floating electrode or between a cathode master electrode and an anode part of an adjacent floating electrode, may be relatively low, around 1.5 Volt. If such an electrical potential difference may be required between each pair of adjacent electrode in figure 3, the electrical potential difference between the master electrodes would be around 4.5 Volt, providing that the stack of electrodes may be arranged in such way that the electrical potential difference between the master electrodes may be equally divided between each pair of adjacent electrodes.

In certain applications of the apparatus for ion removal a high water throughput may be required. This may be achieved by increasing the number of floating electrodes between the master electrodes, for example up until 40 floating electrodes. The power controller would in that case have to supply an electrical potential difference of 60 Volts or more.

Several disadvantages are associated with providing such a high electrical potential difference. First, power controllers that are able to supply these high electrical potential difference under the required conditions are relatively expensive. Furthermore, high electrical potential differences may increase the risk of leak currents, flowing from an electrode to another non-adjacent electrode, thereby causing electrolysis or corrosion, as explained above. Also, high voltages may add extra requirements to the material the apparatus is constructed of, for example with respect to the electrical resistance of conductors and to the insulation capacity of insulators.

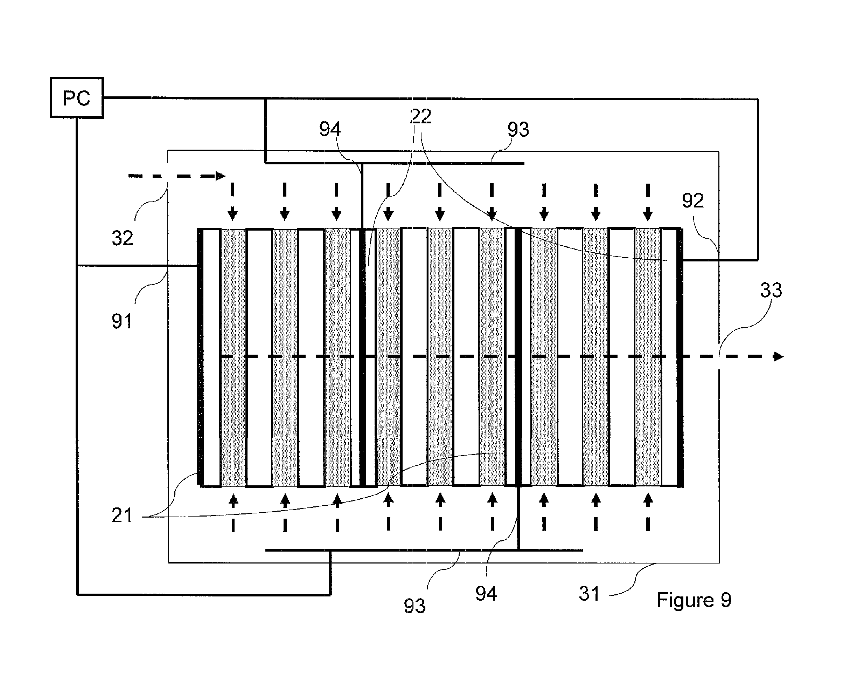

According to an embodiment, a stack of electrodes may be provided in the apparatus for removal of ions, comprising multiple pairs of master electrodes. An example of such a stack is shown in figure 9. Figure 9 shows the apparatus for removal of ions of figure 3 with an extended stack of electrodes. The stack comprises four master electrodes, which combine into three pairs of two adjacent master electrodes. The power controller may apply an electrical potential difference between the first master electrodes 21 (the anodes) and the two second master electrodes 22 (the cathodes).

Master electrodes that are facing two other master electrodes, are part of two pairs of adjacent master electrodes, as can be seen in figure 9. Each pair of adjacent master electrodes comprises an anode master electrode and a cathode master electrode and form together with optional spacers and one or more floating electrodes located between the pair of master electrodes a so called cell. Some of the master electrodes are part of two cells.

A stack of electrodes comprising more than two master electrodes may also be formed by simply multiplying the stack of electrodes as is presented in figure 3. This would yield a construction with two separate master electrodes for each cell. Since according to an embodiment, some of the master electrodes are part of two cells, the number of master electrodes may be lower with respect to a multiplied stack of electrodes according to figure 3. An advantage of a lower number of master electrodes may be lower productions cost, since each master electrode does not only require a current collector and ion storage material, but also an electrical circuit connecting the master electrode to the power controller, housing material and insulation material.

Between each pair of adjacent master electrodes in figure 9, two floating electrode are placed, but one or more than two may also be provided. Each of the floating electrodes may be provided with an ion barrier layer and/or a thin layer of insulating material as described above. An advantage of a high number of floating electrodes may be lower productions cost, since each floating electrode may not require a current collector and electrical circuit connecting the electrode to the power controller while at the same time offering an similar ion storage capacity as a master electrode.

Since more than one pair of master electrodes are provided, the arrangement of the stack of electrodes, i.e. the order and quantity of master electrodes and floating electrodes may be adjusted in response to system requirements, regarding for example the water throughput or/and the maximum electrical potential difference provided by the power controller.

For example, power controllers that may provide 24 Volt under the required conditions for removal of ions are very common. Provided that the potential differences between two adjacent electrodes should be around 1.5 Volt, a stack may be arranged comprising 16 floating electrodes between each pair of adjacent master electrodes. In this way the potential difference used in the apparatus may be 16 times higher than in a configuration where only two master electrodes would be used without floating electrodes. To get a similar removal capacity the current in the configuration with only two master electrodes would need to be 16 times higher leading to large expensive cabling and/or higher losses by the lower conductivity.

The master electrodes may be provided with insulating material as is described above. Furthermore, the two master electrodes that are part of only one cell (or in other words that are facing only another electrode) may be provided inside a part of the housing, such that the housing may be provided with the insulating material as is described above.

The connection between the current collector of each of these master electrodes may be connected to the power controller via a hole 91, 92 through the housing, as indicated in figure 9. With respect to the construction of the apparatus, such a connection would provide a simple way of preventing contact between the water and the conductors. It may also be the case that the current collector of each of these master electrodes may be connected to the power controller via a current divider 93.

An other construction issue may concern the connection between the power controller and each of the current collectors of the master electrodes that are part of two cells.

According to an embodiment a current divider 93 may be provided in the housing of the apparatus for connecting said current collector to the power controller. The current divider 93 may comprise a conductive bar, which may have a circular or square cross section, and insulating material around the bar for insulating the bar from the water. This bar may extend through the housing. Since a positive voltage is to be applied to the anode master electrodes with respect to the voltage applied to the cathode master electrodes, two current dividers 93 may be provided, as is indicated in figure 9.

To connect the above mentioned current collectors to the current divider, each current collector may be provided with a connection wire 94 that extends outwardly from the master electrode in a longitudinal direction to the current divider 93.

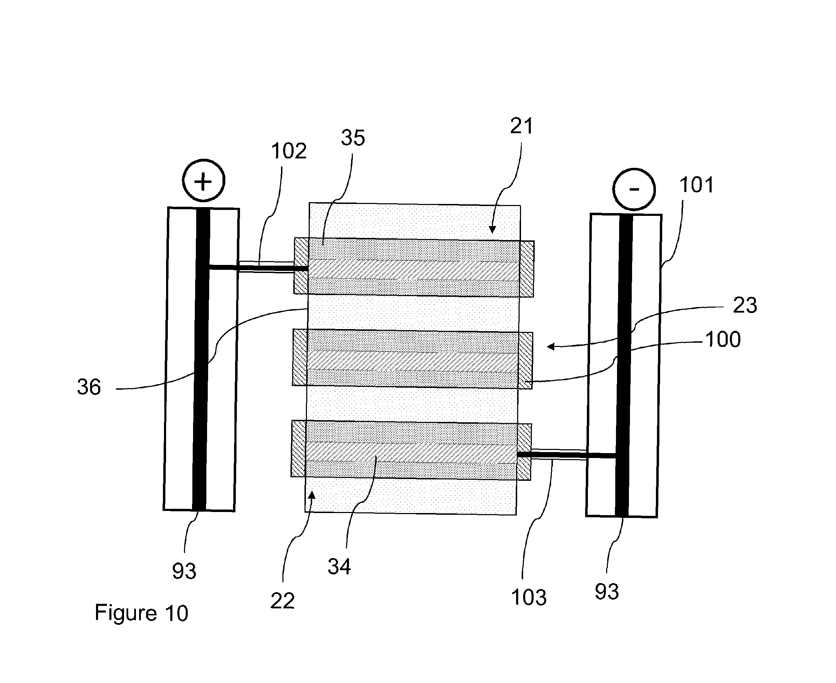

Figure 10 shows a schematic overview of a cross section of a part of another embodiment. Figure 10 shows a part of a stack with master electrodes 21, 22, with a floating electrode 23 and several spacers 36. The stack may comprise more master electrodes and may comprise more floating electrodes, but these electrodes have not been depicted for clarity. Each electrode comprises a current collector 34 and ion storage material 35. An insulating border 100 may be provided around each electrode. A connector 102 may be provided as a connection wire with insulating material 103 around it. The connector 102 connects the current collector 34 with the current divider 93. The connector 102 may comprise a metal rod or graphite rod or block. The current divider 93 may be provided with an insulating material 101 for insulating the current divider from the water flowing around.

A method for removal of ions is also described, the method comprising the steps of:
a) providing a housing with a water inlet and a water outlet; b) providing in the housing a stack of at least five electrodes comprising at least three master electrodes and at least two floating electrodes, each floating electrode located between two adjacent master electrodes; c) applying an electrical potential difference between each two adjacent master electrodes; and, d) allowing water to flow from the water inlet to the water outlet between two adjacent electrodes.

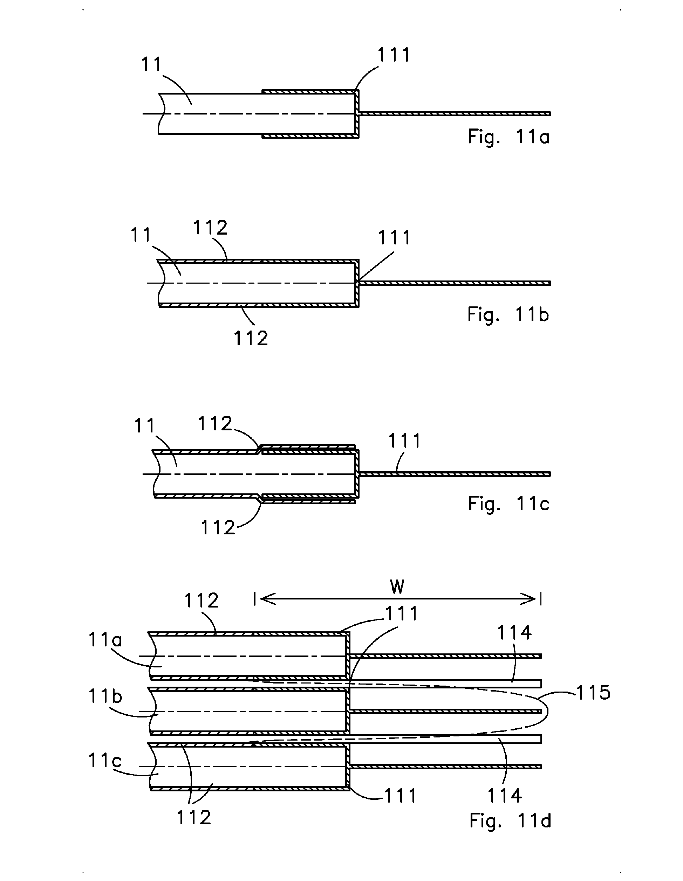

Figures 11 a to 11 d show schematic cross-sections of an edge of a floating electrode 11 with insulating material 111 according to an embodiment. In figure 11a the floating electrode 11 may be provided with a substantially thin layer of insulating material 111. This may be accomplished by providing a thin layer of insulating material with for example a thickness of less than 1000 micrometers, or in a range of 1-500 micrometers, or more preferably in a range of 5-50 micrometers. The layer may be provided with glue or may be heated or laminated on a portion of the electrode surface near the edge. For example the layer of substantially thin insulating material may be partially provided on a surface of the electrode 11, for example it may be provided 1 to 5 mm from the edge of the electrode 11 on the electrode so as to be rigidly connected to the electrode 11. The thin layer of insulating material may extend from said edge outwardly in a longitudinal direction of said electrode at least 0.5 mm or in a range of 0.5 - 50 mm, or more preferably in a range of 3 - 20 mm. The total width of the substantially thin layer of insulating material may therefore be 1 to 25 mm including the portion of the insulating material connected to the electrode and the portion extending outwardly. The substantially thin layer of insulating material may alternatively also be provided only on the electrode or only extending from the edge of the electrode, however the configuration with the substantially thin layer of insulating material partly connected to the electrode and partly extending outward may be a good compromise between manufacturability and loss of electrode surface. The insulating material may be insulating for ions and for electrons.

The substantially thin layer 111 of insulating material may be provided on both sides of the floating electrode 11. The ends of both thin layers 111 may be joined. For example, the end of a first substantially thin layer of insulating material provided on the cathode side of a floating electrode may be joined with the end of a second substantially thin layer of insulating material provided on the anode side of said floating electrode. This may result in better insulation and a more solid construction than when only one substantially thin layer may be disposed. This substantially thin layer may also comprise a strip of an insulating adhesive tape, a resin or the substantially thin layer may be provided by lamination. The adhesive, tape, resin or thin layer may be insulating for ions and for electrons.

A membrane layer 112 (see figure 11b) may be provided on the electrode adjacent to the substantially thin layer of insulating material. The membrane may be provided with an ion exchange membrane e.g. a membrane that may be selective for anions or cations. The membrane may have a thickness in the range of 25 to 150 micron and may be provided as a separate layer or may be coated on the electrode. It may be advantageously if the membrane layer 112 and the insulation layer 111 have a similar thickness on the electrode 11 so that the overall thickness of the electrode/ membrane /electrical insulation layer may be continuous which makes stacking of the layers more easily.

The membrane layer 112 may also be provided on the electrode 11 and the substantially thin layer of insulation material (see figure 11b). The membrane may have a thickness in the range of 25 to 150 micron and may be provided as a separate layer or may be coated.

Figure 11d shows three electrodes 11 a, b, and c, each being provided with substantially thin electrical insulation layers 111. In between the electrodes 11a, b, c a spacer 114 may be provided for allowing water to flow in between adjacent electrodes. The spacers 114 may have a thickness between 50 to 300 micron, more preferably between 70 and 200 micron. This makes that the distance between two adjacent electrodes (2^{*}membrane thickness and 1 ^{*}spacer thickness) may be between 100 - 600 micron, more preferably between 120 and 500 micron. Between adjacent electrodes an electric potential difference between 0.5 and 2, more preferably between 0.7 and 1.5 Volts may be applied. Because of the small distance between two adjacent electrodes this gives a sufficiently strong electric field for deionization of water flowing through the spacer 14. There may be a path for a leakage current 115 from an electrode 11c to a non-adjacent electrode 11a. The potential difference between electrode 11 a and 11c may be double the potential difference between two adjacent electrodes which may cause chemical reactions deteriorating the apparatus. The electrical insulation layer 111 makes the path for the leakage current 115 very long. For example if the insulating layer 111 may be extending 7 mm from the edge of the electrode 11 and may be covering 3 mm of the edge of the electrode the path for the leakage current 115 may be more then 2^{*} (3+7) = 20 mm. Compared with the distance through the neighboring electrode 11 b which may be around 2 mm and may be largely determined by the 1 mm thickness of the electrode 11 the path for the leakage current may be 10 times as long assuring that most of the current may not choose for the path of the leakage current 115. It may be advantageously to have the path for the leakage current 115 at least 5 to 20 times as long as the path through the adjacent electrode. The total width W of the substantially thin layer of insulating material which may include the portion of the insulating material connected to the electrode and/ or may include the portion extending outwardly from the edge may be 2 - 200 times and more preferably 5 - 50 times or even more preferably 5-20 times the thickness of the electrode 11. Since the potential differences are relatively low the thickness of the insulating layer 111 is not very important but because the leakage current prefers to go around the insulating layer 111 the width W may be of more importance. It may therefore be important to have a substantially thin layer of insulating material extending in a longitudinal direction of said electrode. The material usage may be minimized by having a substantially thin layer of insulating material while at the same time by extending it in the longitudinal direction the length of the path for the leakage current may be sufficiently long.

As depicted in figure 11d the electrodes 11a to 11c are floating electrodes, however the electrodes 11c and/or 11a may be replaced with a master electrode. At least one of the two master electrodes may be provided with insulating material constructed and arranged to minimize a leak current from said master electrode to a non-adjacent electrode. The insulating material provided to the master electrode may be provided as a part of the housing.As an alternative embodiment the electrode may be provided with a membrane, e.g. an ion exchange membrane, and the membrane may be locally along the edges of the electrode be altered to become insulating for ions as well. The membrane may be already insulating for electrons and by making it also insulating for ions it may form the insulating material. The alteration may be done for example by heating to oxidize or deteriorate the membrane or by providing a chemical compound so that by the alteration ions may not get through the membrane anymore.

The membrane may be provided on both sides of the electrode and may be extending outwardly from an edge of the electrode. The extending portions may be glued together to make them more rigid. By subsequently altering the membrane that may be extending from the electrode and optionally a portion of the membrane provided to the electrode so that the membrane may becomes insulating for ions and electrodes an extra step of providing an insulating material may be simplified by providing only a membrane and altering the membrane it self. The alteration may be done for example by heating to oxidize or deteriorate the membrane or by providing a chemical compound so that by the alteration ions may not get through the membrane anymore.

In an embodiment, two of the at least three master electrodes are partly provided inside a part of the housing. In another embodiment, each current collector of said two master electrodes may be connected to a power supply via a hole through the housing.

All of the above mentioned embodiments may be used in applications, where a high water flow may be required, i.e. ions should be removed from a water flow of at least 4 to 10 liters per minute, while the production cost of the application should be low. The above mentioned embodiments are especially suitable because of their improved efficiency. Examples of such applications are cooling towers in a cooling system of a building, a washing machine and a coffee machine. The embodiments may also be applied at the water inlet of a house, a building, an office, a factory or groups thereof, where they may remove ions from municipal or tab water before distribution.

Embodiments may be further described by the following clauses:
1. An apparatus for removal of ions from water, the apparatus being provided with a housing comprising: a water inlet for letting water in the housing; a water outlet for letting water out of the housing; at least three electrodes, comprising: two master electrodes, each comprising a current collector connected to a power supply for applying an electrical potential difference between the two master electrodes; and, at least one floating electrode located between the two master electrodes; the apparatus being constructed to allow water to flow from the water inlet to the water outlet between two adjacent electrodes; wherein at least one of the two master electrodes is provided with insulating material constructed and arranged to minimize a leak current from said master electrode to a non-adjacent electrode.
2. The apparatus according to clause 1, wherein the insulating material is provided on a surface of said master electrode, said surface facing none of the other electrodes.
3. The apparatus according to clause 1 or 2, wherein the insulating material comprises resin.
4. The apparatus according to any of clauses 1-3, wherein the insulating material is provided as a part of the housing.
5. The apparatus according to any of clauses 1-4, further comprising a thin layer of insulating material disposed on one of the at least one floating electrode, the thin layer extending outwardly from an edge of said electrode in a longitudinal direction of said electrode.
6. The apparatus according to clause 5, wherein a thickness of the thin layer is less than 1000 micrometers, or in a range of 0-500 micrometers , or more preferably in a range of 5-50 micrometers.
7. The apparatus according to any of clauses 5-6, wherein the thin layer comprises a strip of an adhesive insulating tape.
8. The apparatus according to any of clauses 5-7, wherein the thin layer extends from said edge at least 0.5 mm or in a range of 0.5 - 50 mm , or more preferably in a range of 3 - 20 mm.
9. The apparatus according to any of clauses 5-8, wherein the thin insulating material provides one or more handling points for handling said electrode.
10. The apparatus according to any of clauses 1-9, wherein at least one electrode has a substantially sheet like shape, in which a hole is provided.
11. The apparatus according to any of clauses 1-10, further comprising at least one spacer arranged between two adjacent electrodes for allowing water to flow in between said two adjacent electrodes.
12. A method for removal of ions, the method comprising the steps of: a) providing a housing with a water inlet and a water outlet; b) providing in the housing at least three electrodes, comprising two master electrodes and at least one floating electrode located between the two master electrodes; c) providing an insulating material on at least one of the two master electrodes to minimize a leak current from said master electrode to a non-adjacent electrode; d) applying an electrical potential difference between the two master electrodes; and, e) allowing water to flow from the water inlet to the water outlet between two adjacent electrodes.
13. The method for removal of ions according to clause 12, the method further comprising the step of: b2) providing a thin layer of insulating material disposed on one of the at least one floating electrode, the thin layer extending outwardly from an edge of said electrode in a longitudinal direction of said electrode.

It is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Furthermore, the terms and phrases used herein are not intended to be limiting, but rather, to provide an understandable description of the invention. Elements of the above mentioned embodiments may be combined to form other embodiments.

The terms "a" or "an", as used herein, are defined as one or more than one. The term another, as used herein, is defined as at least a second or more. The terms including and/or having, as used herein, are defined as comprising (i.e., not excluding other elements or steps). Any reference signs in the claims should not be construed as limiting the scope of the claims or the invention. The mere fact that certain measures are recited in mutually different dependent claims does not indicate that a combination of these measures cannot be used to advantage. The scope of the invention is only limited by the following claims.

## Claims

1. An apparatus for removal of ions from water, the apparatus being provided with a housing comprising:
a water inlet for letting water in the housing;
a water outlet for letting water out of the housing;
at least three electrodes, comprising:
two master electrodes, each comprising a current collector connected to a power supply for applying an electrical potential difference between the two master electrodes; and,
at least one floating electrode located between the two master electrodes;
the apparatus being constructed to allow water to flow from the water inlet to the water outlet between two adjacent electrodes;
wherein,
a substantially thin layer of insulating material is provided to an edge of at least one floating electrode, the substantially thin layer extending in a longitudinal direction of said electrode.

2. The apparatus according to claim 1, wherein a thickness of the thin layer is less than 1000 micrometers, or in a range of 0-500 micrometers , or more preferably in a range of 5-50 micrometers.

3. The apparatus according to any of claims 1 or 2, wherein the substantially thin layer comprises a strip of an adhesive insulating tape.

4. The apparatus according to any of claims 1 -3, wherein the substantially thin layer extends from said edge at least 0.5 mm or in a range of 0.5 - 50 mm, or more preferably in a range of 3 - 20 mm in the longitudinal direction of the electrode.

5. The apparatus according to any of claims 1-4, wherein the substantially thin layer of insulating material is at least partially fastened on a main surface of said one floating electrode.

6. The apparatus according to any of claims 1-5, wherein at least one electrode has a substantially sheet like shape, in which a hole is provided and the substantially thin layer of insulating material is provided along an edge of the hole.

7. The apparatus according to any of the preceding claims, wherein the substantially thin layer of insulating material is provided to one of the at least one floating electrode between additional neighboring layers.

8. The apparatus according to claim 7, wherein the additional layers comprise a spacer for allowing water to flow in between adjacent electrodes.

9. The apparatus according to claim 7, wherein the additional layers comprise a membrane.

10. The apparatus according to claim 7, wherein the electrode and the substantially thin layer of insulating material forms a plate having a substantially similar size in the longitudinal direction as the additional layers.

11. The apparatus according to claim 5, wherein the substantially thin layer of insulating material is at least partially fastened on both main surfaces of said one floating electrode.

12. The apparatus according to any of the preceding claims, wherein the total width W of the thin layer of insulating material in the longitudinal direction of the electrode is 2 - 200 times, and more preferably 5 - 50 times or even more preferably 5-20 times the thickness of the electrode.

13. A method for removal of ions, the method comprising:
providing a housing with a water inlet and a water outlet;
providing in the housing at least three electrodes, comprising two master electrodes and at least one floating electrode located between the two master electrodes;
providing a thin layer of insulating material disposed to an edge of at least one floating electrode, the thin layer extending in a longitudinal direction of said electrode;
applying an electrical potential difference between the two master electrodes; and,
allowing water to flow from the water inlet to the water outlet between two adjacent electrodes.

14. The method according to claim 13, wherein the thin layer of insulating material is provided on two sides of the floating electrode.

15. The method according to any of claims 13 or 14, wherein the thin layer of insulating material is provided by lamination.
